# EUROPÄISCHE PATENTSCHRIFT

(11) **EP 2 143 570 B1**
(45) Veröffentlichungstag und Bekanntmachung des Hinweises auf die Patenterteilung: **16.11.2011**
(21) Anmeldenummer: 09159489.5
(22) Anmeldetag: 06.05.2009
(51) Int. Cl.: B60C 9/20, B60C 9/00

(54) **Fahrzeugluftreifen**
Pneumatic tyre for a vehicle
Pneu de véhicule

(30) Priorität: 09.07.2008 DE 102008032384
(43) Veröffentlichungstag der Anmeldung: 13.01.2010
(73) Patentinhaber: Continental Reifen Deutschland GmbH, 30165 Hannover (DE)
(72) Erfinder: Fidan, Sadettin, 30827 Garbsen (DE)
(74) Vertreter: Finger, Karsten

(56) Entgegenhaltungen:
- JP-A- 8 118 908
- US-A- 3 273 978
- US-B1- 6 478 063

## Beschreibung

Die Erfindung betrifft einen Fahrzeugluftreifen, mit einer Radialkarkasse, mit einem radial oberhalb der Karkasse angeordneten Laufstreifen und mit einem Gürtel, welcher zwischen Karkasse und Laufstreifen angeordnet ist, welcher wenigstens eine Lage aus in Gummi eingebettete, parallel und beabstandet zueinander angeordnete Monofilamente aufweist und wobei wenigstens zwei Monofilamente durch ein weiteres Filament in etwa wendelförmig umwickelt sind und einen Festigkeitsträger bilden.

Fahrzeugluftreifen, insbesondere Radialreifen, benötigen während des Fahrbetriebes zur Aufnahme von insbesondere Querkräften bei Kurvenfahrt sowie von Umfangskräften bei Beschleunigung Unterstützung von anderen Reifenbauteilen. Denn die Karkasskonstruktion eines Radialreifens weist radial verlaufende Festigkeitsträger auf, welche die im Fahrbetrieb auftretenden Kräfte nur unzureichend aufnehmen können. Diese unterstützende Aufgabe übernimmt u.a. der Gürtel. Bekannt sind mehrlagige Gürtelkonstruktionen, die aus zwei sich kreuzenden Lagen entgegengesetzt steigender, unter einem spitzen Winkel verlaufender Festigkeitsträger bestehen und welche optional durch eine Bandage stabilisiert werden. Die Festigkeitsträger der zwei Gürtellagen sind üblicherweise Stahlcorde, welche aus verzwirnten Stahlfilamenten bestehen, welche zu einem Cord endverdreht sind. Stahlcorde erfordern einen hohen Materialeinsatz, wodurch das Gewicht und die Herstellungskosten des Reifens erhöht sind.

Die Bestrebungen der Reifenentwicklung gehen jedoch dahin, die Herstellungskosten des Reifens zu senken und am Gewicht des Reifens einzusparen.

Aus diesem Grund werden Monofilamente anstatt der Stahlcorde als Gürtelfestigkeitsträger eingesetzt, wodurch Material eingespart und die Herstellungskosten gesenkt werden. Problematisch an dem Einsatz von Monofilamenten als Gürtelfestigkeitsträger ist jedoch, dass diese sowohl dehnbar, als auch auf Kompressionen ohne Bruch beanspruchbar sein müssen. Andernfalls wäre der Reifen, welcher diese Festigkeitsträger enthaltene Gürtellage aufweist, in seiner Haltbarkeit unerwünscht vermindert.

Ein Fahrzeugluftreifen gemäß dem Oberbegriff des Anspruchs 1 ist aus der US 6,478,063 B 1 bekannt geworden. Die Gürtellage weist in Gummi eingebettete, parallel und beabstandet zueinander angeordnete Monofilamente auf. Alle Monofilamente einer Lage sind herstellungsbedingt durch ein weiteres Filament in etwa wendelförmig umwickelt sind. Durch diese Maßnahme soll sichergestellt werden, dass die Monofilamente während der Herstellung der Gürtellage, insbesondere während der Gummierung der Monofilamente, lagestabil sind.

Ein weiterer Fahrzeugluftreifen mit einem Monofilamente als Festigkeitsträger aufweisenden Gürtel ist beispielsweise aus der DE 4212846 C2 bekannt geworden. Die Festigkeitsträger sind Monofilamente mit einem runden Querschnitt. Jeweils zwei Monofilamente sind unmittelbar benachbart zueinander angeordnet und durch ein äußeres Filament wendelförmig umwickelt. Jedoch sind die parallel ihrer Längsachse gerade ausgebildeten Monofilamente nicht befriedigend auf Kompression beanspruchbar.

Es ist daher die Aufgabe der Erfindung, einen haltbaren Fahrzeugluftreifen mit einer Gürtelkonstruktion bereitzustellen, durch die gute Fahreigenschaften des Reifens ermöglicht sind, durch die das Gewicht des Reifens reduziert und der Materialeinsatz verringert ist.

Die Aufgabe wird gelöst, indem jeder Festigkeitsträger aus zwei, durch ein weiteres Filament umwickelten Monofilamenten besteht und dass die wendelförmige Umwickelung durch das weitere Filament derart ausgebildet ist, dass die Monofilamente undulierend (wellenförmig) angeordnet sind, derart, dass die Amplituden in etwa in radialer Richtung verlaufen.

Erfindungswesentlich ist, dass die wenigstens zwei wendelförmig umwickelten Monofilamente, welche einen Festigkeitsträger bilden, beabstandet voneinander angeordnet sind. Erfindungsgemäß ist die Umwicklung derart, dass die Monofilamente in einer 2-D-Wellenform im Gürtel angeordnet sind, wobei die Amplituden in etwa in radialer Richtung des Reifens verlaufen. Durch diese Beabstandung der Monofilamente und durch deren wellenförmige Ausgestaltung ist der Festigkeitsträger auf Druck und Zug gut beanspruchbar. Es ist trotz des Einsatzes von Monofilamenten als Festigkeitsträger innerhalb der Gürtellage ein haltbarer Fahrzeugluftreifen bereitgestellt, der kostengünstig in seiner Herstellung ist. Zudem ist die Gummidurchdringung des Festigkeitsträgers sehr gut, wodurch die Gummi-Festigkeitsträgeranbindung verbessert ist, wodurch die Haltbarkeit des Reifens ebenfalls positiv beeinflusst ist.

In einer bevorzugten Ausführungsform weist die wendelförmige Umwickelung der wenigstens zwei Monofilamente die Form von in der Gürtellage liegenden Achten auf, wobei ein Monofilament in dem linken Kreisbogen der Acht und das andere Monofilament in dem rechten Kreisbogen der Acht angeordnet ist. Hierdurch ist ein flacher Festigkeitsträger bereitgestellt, durch den die Gürtellage dünn ausgebildet sein kann.

Vorteilhaft ist es, wenn die Monofilamente aus Stahl oder dessen Legierungen bestehen oder aus Polymer mit einer Glasstemperatur größer 40°C, vorzugsweise aus Polyester, bestehen.

Die Monofilamente können verschiedene Querschnitte aufweisen. Zweckmäßig ist ein kreisrunder oder ein ovaler Querschnitt. Ist der Querschnitt oval, so liegt der Festigkeitsträger derart in der Gürtellage, so dass der größte Durchmesser des Ovals parallel zur Gürtellage ausgerichtet ist.

Das weitere Filament kann einen kreisrunden, einen ovalen oder einen flachen Querschnitt aufweisen. Dabei ist es vorteilhaft, wenn das weitere Filament aus Stahl oder dessen Legierungen besteht oder wenn das weitere Filament ein Polymer mit einer Glasstemperatur größer 40°C, vorzugsweise aus Polyester, ist.

Vorteilhafterweise weisen die Monofilamente einen Durchmesser von 0,15 - 0,50mm auf und/oder der Durchmesser des weiteren Filamentes beträgt zwischen 0,10 und 0,35mm und/oder der kleinste Abstand zwischen den mit dem weiteren Filament umwickelten Monofilamenten beträgt 0,20mm.

Weitere Merkmale, Vorteile und Einzelheiten der Erfindung werden anhand der Zeichnungen, die schematische Ausführungsbeispiele darstellen, näher erläutert. Es zeigen die:
Fig. 1 einen Teilquerschnitt durch einen erfindungsgemäßen Radialluftreifen;
Fig. 2 einen Festigkeitsträger in dreidimensionaler Ansicht;
Fig. 3 den Festigkeitsträger der Fig.2 im Längsschnitt.

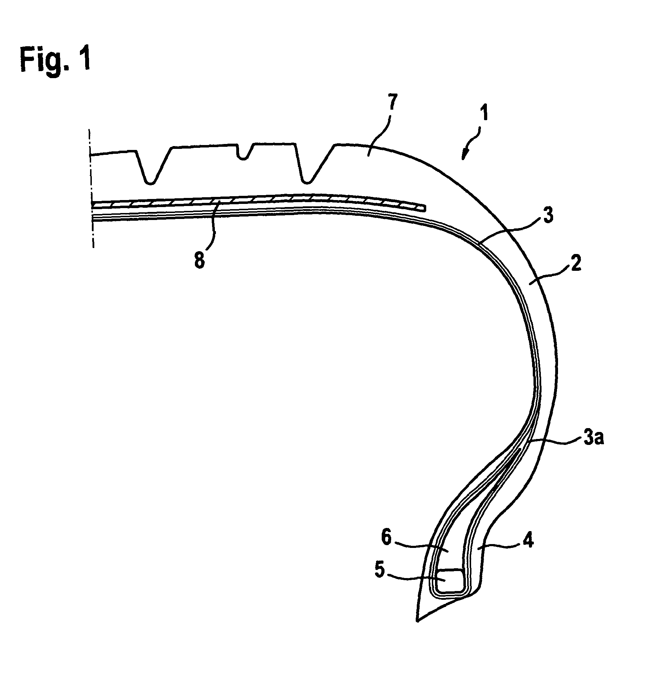

Die **Fig. 1** zeigt die rechte Hälfte eines Querschnittes durch einen PKW-Radialluftreifen 1. Der Reifen 1 bestehend aus Seitenwänden 2, aus einer Karkasse 3, die sich von einem Wulstbereich 4 zum anderen Wulstbereich 4 erstreckt und von axial innen nach axial außen um Wulstkerne 5 und den Wulstkernen 5 aufsitzenden Wulstkernprofilen 6 als Karkasshochschlag 3a herumgeführt ist, aus einem radial oberhalb der Karkasse 3 angeordneten Laufstreifen 7 und aus einem einlagigen Gürtel 8, der zwischen Karkasse 3 und Laufstreifen 7 radial unterhalb des Laufstreifens 7 angeordnet ist. Der Gürtel 8 besteht aus einer Lage aus in Gummi 10 eingebetteten Festigkeitsträgern 9, welche mit ihren Längsachsen 11 in Umfangsrichtung des Reifens ausgerichtet sind. Die Festigkeitsträger 9 bestehen aus zwei parallel zueinander und voneinander beabstandeten Monofilamenten 10, welche durch ein weiteres Filament 11 derart wendelförmig umwickelt sind, so dass die Monofilamente 10 2-D-undulierend (wellenförmig) angeordnet sind, derart, dass die Amplituden 15 in etwa in radialer Richtung verlaufen. Hierdurch sind die Festigkeitsträger 9 dehnbar und komprimierbar. Die Karkasse 3 kann in herkömmlicher und bekannter Weise ausgeführt sein und somit in eine Gummimischung eingebettete, in radialer Richtung verlaufende Verstärkungsfäden aus einem textilen Material oder aus Stahlcord aufweisen.

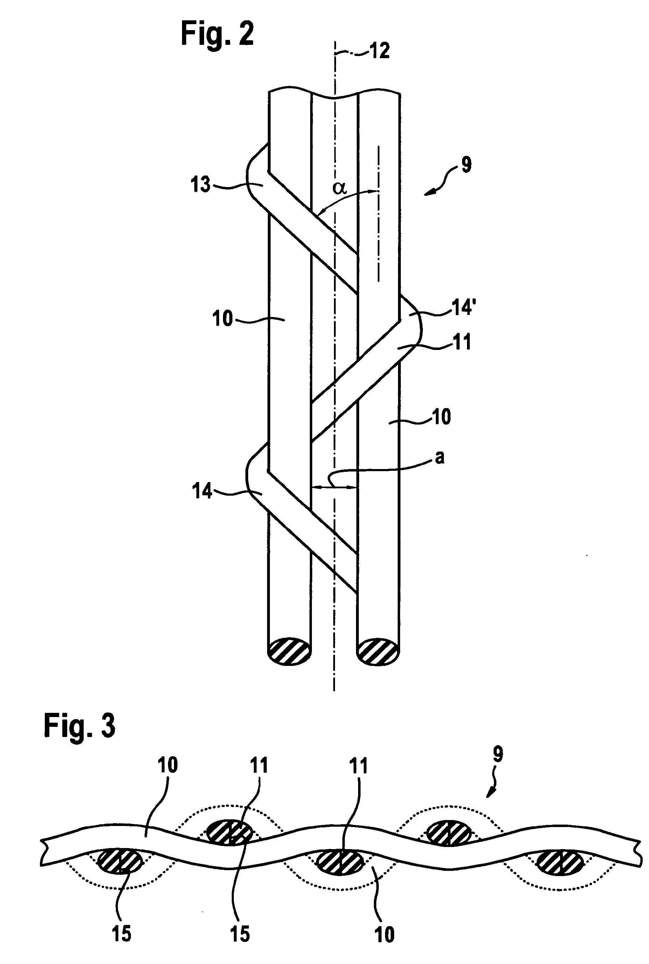

Die **Fig. 2** zeigt den Festigkeitsträger 9 in dreidimensionaler Ansicht in einer bevorzugten Ausführungsform, in welcher der Festigkeitsträger 9 in einem Gürtel 8 des in der Fig. beschriebenen Fahrzeugluftreifen 1 einsetzbar ist. Die **Fig.3** zeigt einen Schnitt entlang der Längsachse des Festigkeitsträgers der Fig.2. Der Festigkeitsträger 9 weist zwei Monofilamente 10 auf, welche parallel und beabstandet zueinander angeordnet sind und welche durch ein weiteres Filament 11 umwickelten sind. Die wendelförmige Umwickelung 13 durch das weitere Filament 11 derart ausgebildet ist, dass die Monofilamente 10 undulierend (wellenförmig) angeordnet sind, derart, dass die Amplituden 15 in etwa in radialer Richtung im Reifen verlaufen. Die wendelförmige Umwickelung 13 der zwei Monofilamente 10 weist die Form von in der Gürtellage liegenden gewendelten Achten auf, wobei ein Monofilament 10 in dem linken Kreisbogen 14 der Acht und das andere Monofilament in dem rechten Kreisbogen 14' der Acht angeordnet ist. Die Monofilamente 10 weisen einen runden Querschnitt auf, während das weitere Filament 11 einen ovalen Querschnitt aufweist. Dabei umwendelt das weitere Filament 11 die Monofilamente 10 derart, dass der größte Durchmesser des ovalen Querschnittes des weiteren Filamentes 11 in etwa parallel zur Festigkeitsträgerlängsachse 12 erstreckt ist. Der Festigkeitsträger 9 besteht aus Stahl. Die Beabstandung a zwischen den beiden Monofilamenten 10 eines Festigkeitsträgers ist der kürzeste Abstand der einander zugewandten Monofilamentoberflächen und beträgt 0,25mm. Die Querschnittsfläche der Monofilamente 10 beträgt 0,07mm² und die Querschnittsfläche des weiteren Filamentes 11 beträgt 0,18mm². Der Winkel α, welcher die Steigung der wendelartigen Umflechtung des weiteren Filamentes 11 in Bezug auf die Längserstreckung des Monofilamentes 10 beschreibt, beträgt 30°. In der Fig.3 ist zu erkennen, dass durch die wendelförmige Umwickelung des weiteren Filamentes 11 die Monofilamente 10 undulierend (wellenförmig) angeordnet sind, derart, dass die Amplituden in etwa in radialer Richtung des Reifens verlaufen. Dabei ist die Wellenbewegung der beiden Monofilamente 10 des Festigkeitsträgers 9 gegenläufig.

### Bezugszeichenliste

### (Teil der Beschreibung)

- 1: Reifen
- 2: Seitenwand
- 3: Karkasse
- 3a: Karkasshochschlag
- 4: Wulstbereich
- 5: Wulstkern
- 6: Wulstkernprofil
- 7: Laufstreifen
- 8: Gürtel
- 9: Festigkeitsträger
- 10: Monofilament
- 11: Filament
- 12: Längsachse des Festigkeitsträgers
- 13: Wendelförmige Umwicklung
- 14: linker Kreisbogen der Umwicklung
- 14': rechter Kreisbogen der Umwicklung
- 15: Amplitude
- a: Beabstandung

## Patentansprüche

1. Fahrzeugluftreifen (1),
mit einer Radialkarkasse (3), mit einem radial oberhalb der Karkasse (3) angeordneten Laufstreifen (7) und mit einem Gürtel (8), welcher zwischen Karkasse (3) und Laufstreifen (7) angeordnet ist, welcher wenigstens eine Lage aus in Gummi (10) eingebettete, parallel und beabstandet zueinander angeordnete Monofilamente (10) aufweist und wobei wenigstens zwei Monofilamente (10) durch ein weiteres Filament in etwa wendelförmig umwickelt sind und einen Festigkeitsträger (9) bilden, **dadurch gekennzeichnet, dass** jeder Festigkeitsträger aus zwei, durch ein weiteres Filament (11) umwickelten Monofilamenten (10) besteht und dass die wendelförmige Umwickelung (13) durch das weitere Filament (11) derart ausgebildet ist, dass die Monofilamente (10) undulierend angeordnet sind, derart, dass die Amplituden (15) in etwa in radialer Richtung verlaufen.

2. Fahrzeugluftreifen nach Anspruch 1,
**dadurch gekennzeichnet, dass** die wendelförmige Umwickelung (13) der zwei Monofilamente (10) die Form von in der Gürtellage liegenden Achten aufweist, wobei ein Monofilament (10) in dem linken Kreisbogen (14) der Acht und das andere Monofilament (10) in dem rechten Kreisbogen (14') der Acht angeordnet ist.

3. Fahrzeugluftreifen nach einem oder mehreren der vorangehenden Ansprüche,
**dadurch gekennzeichnet, dass** die Monofilamente (10) aus Stahl oder dessen Legierungen bestehen.

4. Fahrzeugluftreifen nach einem oder mehreren der vorangehenden Ansprüche 1 oder 2, **dadurch gekennzeichnet, dass** die Monofilamente (10) aus Polymer mit einer Glasstemperatur größer 40°C, vorzugsweise aus Polyester, bestehen.

5. Fahrzeugluftreifen nach einem oder mehreren der vorangehenden Ansprüche,
**dadurch gekennzeichnet, dass** die Monofilamente (10) einen kreisrunden oder einen ovalen Querschnitt aufweisen.

6. Fahrzeugluftreifen nach einem oder mehreren der vorangehenden Ansprüche, **dadurch gekennzeichnet, dass** das weitere Filament (11) einen kreisrunden, einen ovalen oder einen flachen Querschnitt aufweist.

7. Fahrzeugluftreifen nach Anspruch 6,
**dadurch gekennzeichnet, dass** das weitere Filament (11) aus Stahl oder dessen Legierungen besteht.

8. Fahrzeugluftreifen nach Anspruch 6,
**dadurch gekennzeichnet, dass** das weitere Filament (11) ein Polymer mit einer Glasstemperatur größer 40°C, vorzugsweise aus Polyester, ist.

## Claims

1. Pneumatic vehicle tyre (1),
with a radial carcass (3), with a tread rubber (7), which is arranged radially above the carcass (3), and with a breaker belt (8), which is arranged between the carcass (3) and the tread rubber (7) and has at least one ply of monofilaments (10) embedded in rubber (10) and arranged parallel to one another and spaced apart from one another, and wherein at least two monofilaments (10) are wrapped around approximately helically by a further filament and form a reinforcing element (9),
**characterized in that** each reinforcing element consists of two monofilaments (10) wrapped around by a further filament (11) and **in that** the helical wrap-around (13) by the further filament (11) is formed in such a way that the monofilaments (10) are arranged in an undulating manner such that the amplitudes (15) extend approximately in the radial direction.

2. Pneumatic vehicle tyre according to Claim 1, **characterized in that** the helical wrap-around (13) of the two monofilaments (10) have the form of a figure of eight lying in the belt ply, one monofilament (10) being arranged in the left-hand arc (14) of the figure of eight and the other monofilament (10) being arranged in the right-hand arc (14') of the figure of eight.

3. Pneumatic vehicle tyre according to one or more of the preceding claims, **characterized in that** the monofilaments (10) consist of steel or alloys thereof.

4. Pneumatic vehicle tyre according to one or more of the preceding Claims 1 and 2, **characterized in that** the monofilaments (10) consist of a polymer with a glass transition temperature greater than 40°C, preferably of polyester.

5. Pneumatic vehicle tyre according to one or more of the preceding claims, **characterized in that** the monofilaments (10) have a circular or oval cross section.

6. Pneumatic vehicle tyre according to one or more of the preceding claims, **characterized in that** the further filament (11) has a circular, oval or flat cross section.

7. Pneumatic vehicle tyre according to Claim 6, **characterized in that** the further filament (11) consists of steel or alloys thereof.

8. Pneumatic vehicle tyre according to Claim 6, **characterized in that** the further filament (11) is a polymer with a glass transition temperature greater than 40°C, preferably polyester.

## Revendications

1. Bandage pneumatique (1) pour roue de véhicule, présentant une carcasse radiale (3), une bande de roulement (7) disposée radialement au-dessus de la carcasse (3) et une ceinture (8) disposée entre la carcasse (3) et la bande de roulement (7) et qui présente au moins une couche de monofilaments (10) incorporés dans du caoutchouc (10) et disposés parallèlement et à distance les uns des autres, au moins deux monofilaments (10) étant entourés sensiblement en hélice par un autre filament et formant un renfort (9),
**caractérisé en ce que**
chaque renfort est constitué de deux monofilaments (10) entourés par un autre filament (11) et **en ce que** la spirale (13) de forme hélicoïdale formée par l'autre filament (11) est configurée de telle sorte que les monofilaments (10) soient disposés en ondulations dont les amplitudes (15) s'étendent sensiblement dans la direction radiale.

2. Bandage pneumatique pour roue de véhicule selon la revendication 1, **caractérisé en ce que** la spirale (13) de forme hélicoïdale qui entoure les deux monofilaments (10) présente la forme de huits situés dans la couche de ceinture, un monofilament (10) étant disposé dans l'arc de cercle (14) de gauche du huit et l'autre monofialement (10) dans l'arc de cercle (14') de droite du huit.

3. Bandage pneumatique pour roue de véhicule selon l'une ou plusieurs des revendications précédentes, **caractérisé en ce que** les monofilaments (10) sont constitués d'acier ou d'alliages d'acier.

4. Bandage pneumatique pour roue de véhicule selon l'une ou plusieurs des revendications 1 ou 2 qui précèdent, **caractérisé en ce que** les monofilaments (10) sont constitués d'un polymère dont la température de transition vitreuse est supérieure à 40°C, et de préférence de polyester.

5. Bandage pneumatique pour roue de véhicule selon l'une ou plusieurs des revendications précédentes, **caractérisé en ce que** les monofilaments (10) ont une section transversale circulaire ou ovale.

6. Bandage pneumatique pour roue de véhicule selon l'une ou plusieurs des revendications précédentes, **caractérisé en ce que** l'autre filament (11) présente une section transversale circulaire, une section transversale ovale ou une section transversale aplatie.

7. Bandage pneumatique pour roue de véhicule selon la revendication 6, **caractérisé en ce que** l'autre filament (11) est constitué d'acier ou d'alliages d'acier.

8. Bandage pneumatique pour roue de véhicule selon la revendication 6, **caractérisé en ce que** l'autre filament (11) est un polymère dont la température de transition vitreuse est supérieure à 40°C, et de préférence de polyester.
